# EUROPEAN PATENT APPLICATION

(11) **EP 3 372 352 A1**
(43) Date of publication of application: **12.09.2018**
(21) Application number: 18155509.5
(22) Date of filing: 07.02.2018
(51) Int. Cl.: B25J 9/06, B25J 13/08, G01L 1/20, G01L 5/00

(54) **APPARATUS AND METHODS FOR ENABLING DETERMINATION OF A SHAPE OF AT LEAST A PORTION OF A CONTINUUM ROBOT**

(30) Priority: 09.03.2017 GB 201703757
(71) Applicant: Rolls-Royce plc, London SW1E 6AT (GB)
(72) Inventor: Rabani, Amir, Derby, Derbyshire DE24 8BJ (GB); Alatorre Troncoso, David, Derby, Derbyshire DE24 8BJ (GB)
(74) Representative: Rolls-Royce plc

(57) **Abstract**

Apparatus for enabling determination of a shape of at least a portion of a continuum robot, the apparatus comprising: a flexible cover defining a first end, a second end opposite to the first end, and a cavity for receiving at least a portion of a continuum robot therein; and a first elastic strain sensor coupled to the flexible cover and being configured to provide a first output signal associated with movement of the flexible cover.

## Description

### TECHNOLOGICAL FIELD

The present disclosure concerns apparatus and methods for enabling determination of a shape of at least a portion of a continuum robot.

### BACKGROUND

Continuum robots may be used in industry to perform inspection and/or repair activities on an article. Examples of continuum robots include (but are not limited to) "snake arm" robots and "elephant trunk" robots. A continuum robot may be inserted into a gas turbine engine through a borescope port or through the fan to inspect the interior of the gas turbine engine for wear and/or damage. By way of another example, a continuum robot may be inserted into a gas turbine engine to carry out a repair activity on a component within the gas turbine engine (blending of a leading edge of a compressor blade for example).

### BRIEF SUMMARY

According to various examples there is provided apparatus for enabling determination of a shape of at least a portion of a continuum robot, the apparatus comprising: a flexible cover defining a first end, a second end opposite to the first end, and a cavity for receiving at least a portion of a continuum robot therein; and a first elastic strain sensor coupled to the flexible cover and being configured to provide a first output signal associated with movement of the flexible cover.

The flexible cover may be elongate and may have a longitudinal axis that extends between the first end and the second end. The cavity may be elongate and extend along the longitudinal axis.

The cavity may extend between the first end and the second end, and may be open at the first end and at the second end.

The first elastic strain sensor may comprise a conductive elastic material.

The first elastic strain sensor may comprise a non-conductive elastic vessel defining a cavity therein, and a conductive material positioned within the cavity.

The conductive material positioned within the cavity of the non-conductive elastic vessel may comprise a conductive liquid.

The apparatus may further comprise a plurality of fibres positioned within the cavity of the non-conductive elastic vessel.

The first elastic strain sensor may comprises a first conductive elastic member, a second conductive elastic member, and a non-conductive elastic member positioned between the first conductive elastic member and the second conductive elastic member.

The apparatus may further comprise a second elastic strain sensor coupled to the flexible cover. The second elastic strain sensor may be configured to provide a second output signal associated with the movement of the flexible cover.

The flexible cover may define a longitudinal axis. The first elastic strain sensor and the second elastic strain sensor may be positioned to at least partially overlap one another along the longitudinal axis.

The apparatus may further comprise a controller configured to receive the first output signal and the second output signal, and to perform a torsion measurement of the first segment using the received first output signal and the second output signal.

The flexible cover may define a longitudinal axis. The first elastic strain sensor and the second elastic strain sensor may be positioned to not overlap one another along the longitudinal axis.

The apparatus may further comprise a controller configured to receive the first output signal from the first elastic strain sensor, and to determine the shape of at least a part of the flexible cover.

The controller may be configured to control an actuator of the continuum robot using the determined shape of at least the part of the flexible cover to move the continuum robot.

The apparatus may further comprise a continuum robot. The flexible cover may be separate to the continuum robot.

The continuum robot may further comprise a plurality of segments. Each segment of the plurality of segments may have a first end and a second opposite end. The flexible cover may be positionable on the continuum robot so that the first elastic strain sensor is positioned within the first end and the second end of a segment of the plurality of segments.

According to various examples there is provided a method of manufacturing an apparatus as claimed in any of the preceding claims, the method comprising: receiving data defining dimensions for the flexible cover; and controlling a three dimensional printer to manufacture the apparatus using the received data.

The method may further comprise: receiving data defining a position of the first elastic strain sensor relative to the flexible cover; and controlling the three dimensional printer to print the first elastic strain sensor at the defined position of the flexible cover, the defined position being within the first end and the second end of the segment of the continuum robot when the continuum robot is received within the cavity of the flexible cover.

According to various examples there is provided apparatus for controlling manufacture of an apparatus as described in any of the preceding paragraphs, the apparatus comprising a controller configured to perform a method as described in any of the preceding paragraphs.

According to various examples there is provided a computer program that, when read by a computer, causes performance of the method as described in any of the preceding paragraphs.

According to various examples there is provided a non-transitory computer readable storage medium comprising computer readable instructions that, when read by a computer, cause performance of the method as described in any of the preceding paragraphs.

According to various examples there is provided a signal comprising computer readable instructions that, when read by a computer, cause performance of the method as described in any of the preceding paragraphs.

According to various examples there is provided a method of controlling a continuum robot using an apparatus as described in any of the preceding paragraphs, the method comprising: receiving the first output signal from the first elastic strain sensor; determining the shape of at least a part of the flexible cover using the received first output signal; and controlling an actuator using the determined shape of at least the part of the flexible cover to move the continuum robot.

According to various examples there is provided apparatus for controlling a continuum robot, the apparatus comprising a controller configured to perform a method as described in the preceding paragraph. According to various examples there is provided a computer program that, when read by a computer, causes performance of the method as described in the preceding paragraph. According to various examples there is provided a non-transitory computer readable storage medium comprising computer readable instructions that, when read by a computer, cause performance of the method as described in the preceding paragraph. According to various examples there is provided a signal comprising computer readable instructions that, when read by a computer, cause performance of the method as described in the preceding paragraph.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION

Embodiments will now be described by way of example only, with reference to the Figures, in which:
Fig. 1 illustrates a schematic diagram of a first apparatus for enabling determination of a shape of at least a portion of a continuum robot according to various examples;
Fig. 2 illustrates a schematic diagram of a continuum robot according to an example;
Fig. 3 illustrates a schematic diagram of an elastic strain sensor according to a first example;
Fig. 4 illustrates a schematic diagram of an elastic strain sensor according to a second example;
Fig. 5 illustrates a schematic diagram of an elastic strain sensor according to a third example;
Fig. 6 illustrates a schematic diagram of an elastic strain sensor according to fourth example;
Fig. 7 illustrates a schematic diagram of a second apparatus for enabling determination of a shape of at least a portion of a continuum robot according to various examples;
Figs. 8A, 8B and 8C illustrate front views of three arrangements of elastic strain sensors according to various examples;
Fig. 9 illustrates a schematic diagram of a third apparatus for enabling determination of a shape of at least a portion of a continuum robot according to various examples;
Fig. 10 illustrates a flow diagram of a method of controlling a continuum robot according to various examples;
Fig. 11 illustrates a schematic diagram of apparatus for controlling manufacture of an apparatus for enabling determination of a shape of at least a portion of a continuum robot according to various examples; and
Fig. 12 illustrates a flow diagram of a method of manufacturing an apparatus for enabling determination of a shape of at least a portion of a continuum robot according to various examples.

### DETAILED DESCRIPTION

In the following description, the terms 'connected' and 'coupled' mean operationally connected and coupled. It should be appreciated that there may be any number of intervening components between the mentioned features, including no intervening components.

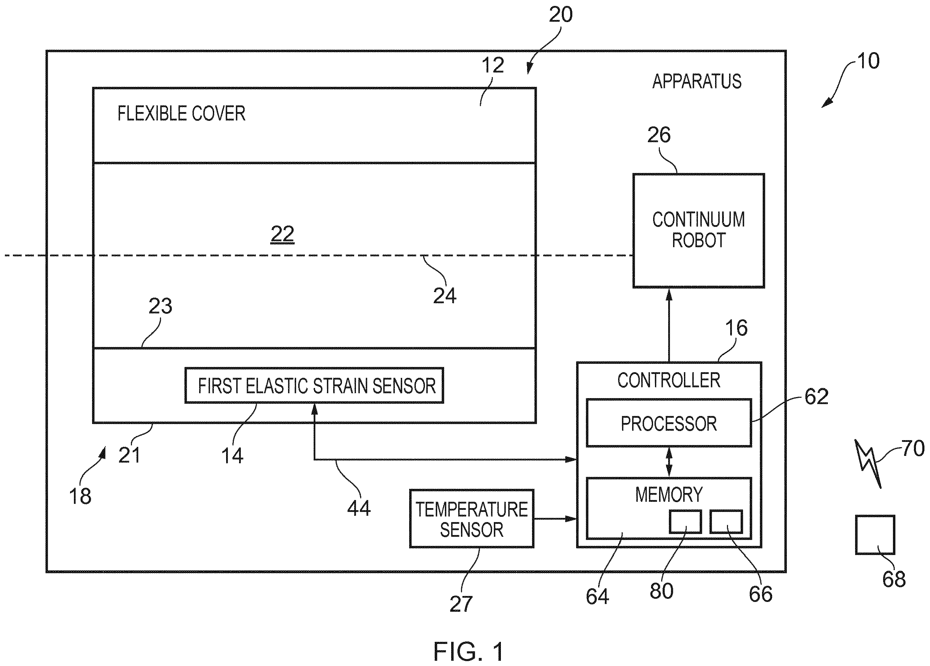

Fig. 1 illustrates a schematic diagram of a first apparatus 10 including a flexible cover 12 and an elastic strain sensor 14. In some examples, the apparatus 10 may additionally include a controller 16 and/or a continuum robot 26 and/or a temperature sensor 27.

The flexible cover 12 may comprise any suitable material, and may comprise thermoplastic polyurethane, rubber-like photopolymers, or an elastomeric material such as silicone rubber, nitrile rubber, or butyl rubber, for example. The flexible cover 12 may have any suitable shape and may have a circular cross sectional shape, an elliptical cross sectional shape, or a polygonal cross sectional shape.

The flexible cover 12 defines a first end 18, a second end 20 opposite to the first end 18, an outer surface 21, and a cavity 22 defined by an inner surface 23 of the flexible cover 12. The cavity 22 is configured to receive at least a portion of the continuum robot 26 therein. The flexible cover 12 may be elongate and have a longitudinal axis 24 that extends between the first end 18 and the second end 20. In such examples, the cavity 22 is also elongate and extends along the longitudinal axis 24 between the first end 18 and the second end 20. The cavity 22 is open at the first end 18 and at the second end 20 and thus defines an open aperture through the flexible cover 12 along the longitudinal axis 24.

The continuum robot 26 may be any suitable robot and may be a "snake arm" robot, a "snake" robot, or an "elephant trunk" robot, for example. The continuum robot 26 may be used in various industries to perform one or more actions. For example, the continuum robot 26 may be inserted within a gas turbine engine to inspect and/or repair the gas turbine engine. By way of another example, the continuum robot 26 may be inserted into a pressurised water reactor (PWR) of a nuclear power plant to inspect and/or repair the pressurised water reactor.

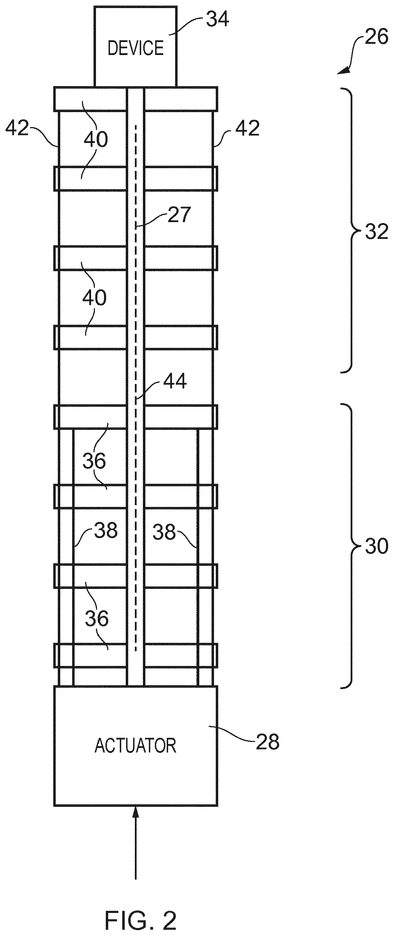

Fig. 2 illustrates a schematic diagram of a continuum robot 26 according to an example. The continuum robot 26 has a longitudinal axis 27 and includes an actuator 28, a first segment 30, a second segment 32, and a device 34. The first segment 30 includes a first plurality of disks 36 and a first plurality of control cables 38 for controlling the movement of the first plurality of disks 36. The second segment 32 includes a second plurality of disks 40 and a second plurality of control cables 42 for controlling the movement of the second plurality of disks 40. A flexible backbone 44 extends along the longitudinal axis 27 through the first and second segments 30, 32 and through the centres of the first and second plurality of disks 36, 40. The device 34 is coupled to the open end of the second segment 32 and may comprise a machine tool (such as a drill, or an output for a laser) or a sensor (for example, a camera including a charge coupled device sensor and/or a complementary metal oxide semiconductor sensor). The actuator 28 is configured to move the first and second plurality of control cables 38, 42 to control the movement of the first segment 30 and the second segment 32.

In some examples, the continuum robot 26 may include a plurality of flexible ligaments that extend between the disks 36, 40, and a cover that houses the first segment 30 and the second segment 32. The flexible ligaments and the cover are not illustrated in Fig. 2 to maintain the clarity of Fig. 2. Additionally, it should be appreciated that the continuum robot 26 may comprise any number of segments and only two segments are illustrated in Fig. 2 to maintain the clarity of Fig. 2.

In other examples, the continuum robot 26 may be a 'soft' robot with no defined component at the intersection between segments. Where the continuum robot 26 is a 'soft' robot, the continuum robot 26 may not include any disks, and may instead comprise soft fluid actuators that include elastomeric matrices with embedded flexible materials. For example, the first actuator 18 may comprise one or more elastic vessels that are configured to change shape in response to a change in internal pressure of the elastic vessels. The one or more elastic vessels may extend between the first end and the second end of the first segment. The one or more elastic vessels may comprise one or more of the elastic strain sensors to measure the change in shape.

The first elastic strain sensor 14 is coupled to the flexible cover 12. In some examples, the first elastic strain sensor 14 may be coupled to the outer surface 21 or the inner surface 23 of the flexible cover 12. In other examples, the first elastic strain sensor 14 may be embedded within the flexible cover 12 so that the first elastic strain sensor 14 is positioned at least partly between the outer surface 21 and the inner surface 23.

The first elastic strain sensor 20 is configured to provide a first output signal 44 associated with movement of the second end 20 of the flexible cover 12 relative to the first end 18 of the flexible cover 12. For example, as the second end 20 moves relative to the first end 18, the first elastic strain sensor 14 deforms. The deformation of the first elastic strain sensor 14 may change the resistivity or capacitance of the first elastic strain sensor 14, thus changing the voltage of the first output signal 44.

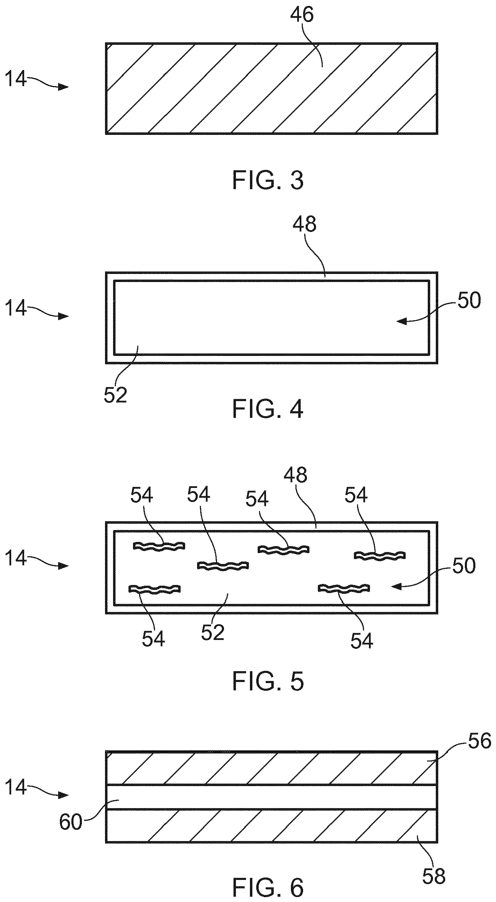

The first elastic strain sensor 14 is electrically conductive and may have any suitable structure. The first elastic strain sensor 14 may be structured as illustrated in Figs. 3, 4, 5 and 6.

Fig. 3 illustrates a schematic diagram of the first elastic strain sensor 14 according to a first example. The first elastic strain sensor 14 comprises a conductive elastic material 46 such as a butyl rubber impregnated with carbon black, or a nitrile rubber impregnated with carbon black. When the first elastic strain sensor 14 is stretched and changes in length, the resistivity of the first elastic strain sensor 14 changes with the change in length.

Fig. 4 illustrates a schematic diagram of the first elastic strain sensor 14 according to a second example. The first elastic strain sensor 14 comprises a non-conductive elastic vessel 48 defining a cavity 50, and a conductive liquid 52 positioned within the cavity 50. For example, the non-conductive elastic vessel 48 may comprise silicone rubber, and the conductive liquid 52 may include a metal that is liquid at or near room temperature, copper grease, water-soluble ions such as tetrabutylphosphonium methanesulfonate in solution, room temperature ionic liquids such as 1-butyl-3-methylimidazolium trifluoromethanesulfonate, and 1-butyl-3-octylimidazolium chloride. When the first elastic strain sensor 14 is stretched, the conductive liquid 52 adopts the shape of the deformed cavity 50 and the resistivity of the first elastic strain sensor 14 consequently changes.

Fig. 5 illustrates a schematic diagram of the first elastic strain sensor 14 according to a third example. The first elastic strain sensor 14 comprises a non-conductive elastic vessel 48 defining a cavity 50, a fluid 52 positioned within the cavity 50, and a plurality of fibres 54 positioned within the cavity 50. For example, the non-conductive elastic vessel 48 may comprise silicone rubber, the fluid 52 may comprise a conductive material (such as any of the materials mentioned in the preceding paragraph), and the plurality of fibres 54 may comprise a conductive material (such as a metal, for example, steel wool or gold fibres) or a highly permeable non-conductive material (such as cotton, glass fibres, carbon fibres, or synthetic fibres such as nylon or other polymers). In other examples, the fluid 52 may comprise a non-conductive material (such as air), and the plurality of fibres 44 may comprise a conductive material (such as a metal, for examples, steel wool or gold fibres).. The density of the plurality of fibres 54 within the cavity 50 is selected so that the plurality of fibres 54 may move relative to one another, but remain in electrical contact with one another.

In some examples, the non-conductive elastic vessel 48 may be formed from the material of the flexible cover 12. In other words, the flexible cover 12 may define the cavity 50 of the first elastic strain sensor 14 between the outer surface 21 and the inner surface 23 of the flexible cover 12.

Fig. 6 illustrates a schematic diagram of the first elastic strain sensor 14 according to a fourth example. The first elastic strain sensor 14 comprises a first conductive elastic member 56, a second conductive elastic member 58, and a non-conductive elastic member 60 positioned between the first conductive elastic member 56 and the second conductive elastic member 58. The first and second conductive elastic members 56, 58 may comprise any suitable material and may comprise a butyl rubber impregnated with carbon black, or a nitrile rubber impregnated with carbon black. The non-conductive elastic member 60 may comprise a non-conductive material such as silicone rubber.

When the first elastic strain sensor 14 is stretched, the depth of the non-conductive elastic member 60 is reduced, thus bringing the first and second conductive elastic members 56, 58 closer to one another. The changing proximity of the first and second conductive elastic members 56, 58 changes the capacitance of the first elastic strain sensor 14, thus causing a change in the output signal 44 from the first elastic strain sensor 14.

It should be appreciated than an elastic strain sensor according to the fourth example may have more than two conductive elastic members, and more than one non-conductive elastic member.

The temperature sensor 27 may comprise any suitable device, or devices, for sensing one or more temperatures at the flexible cover 12. For example, the temperature sensor 27 may include one or more thermocouples that are mounted to the exterior surface 21 of the flexible cover 12, or are embedded within the flexible cover 12 between the outer surface 21 and the inner surface 23. The controller 16 is configured to receive the sensed one or more temperatures from the temperature sensor 27.

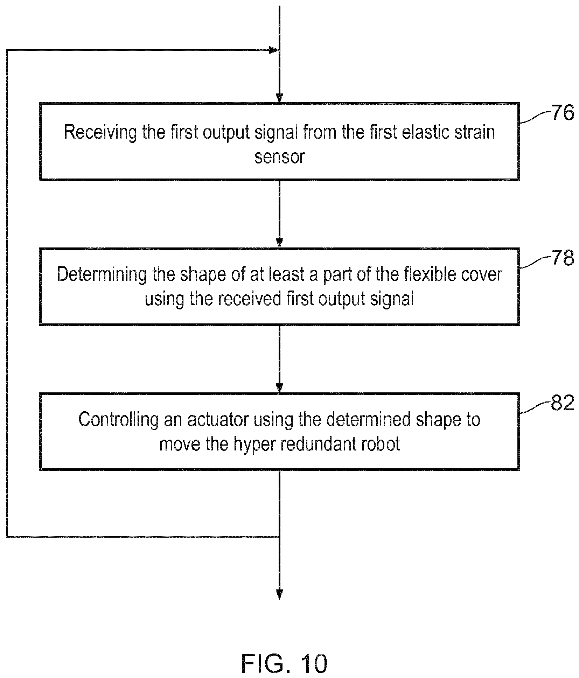

The controller 16 may comprise any suitable circuitry to cause performance of the methods described herein and as illustrated in Fig. 10. The controller 16 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), to perform the methods.

In various examples, the controller 16 may comprise at least one processor 62 and at least one memory 64. The memory 64 stores a computer program 66 comprising computer readable instructions that, when read by the processor 62, causes performance of the methods described herein, and as illustrated in Fig. 10. The computer program 66 may be software or firmware, or may be a combination of software and firmware.

The processor 62 may be located on the flexible cover 12, or may be located remote from the flexible cover 12, or may be distributed between the flexible cover 12 and a location remote from the flexible cover 12. The processor 62 may include at least one microprocessor and may comprise a single core processor, may comprise multiple processor cores (such as a dual core processor or a quad core processor), or may comprise a plurality of processors (at least one of which may comprise multiple processor cores).

The memory 64 may be located on the flexible cover 12, or may be located remote from the flexible cover 12, or may be distributed between the flexible cover 12 and a location remote from the flexible cover 12. The memory may be any suitable non-transitory computer readable storage medium, data storage device or devices, and may comprise a hard disk and/or solid state memory (such as flash memory). The memory 64 may be permanent non-removable memory, or may be removable memory (such as a universal serial bus (USB) flash drive or a secure digital card). The memory 64 may include: local memory employed during actual execution of the computer program 66; bulk storage; and cache memories which provide temporary storage of at least some computer readable or computer usable program code to reduce the number of times code may be retrieved from bulk storage during execution of the code.

The computer program 66 may be stored on a non-transitory computer readable storage medium 68. The computer program 66 may be transferred from the non-transitory computer readable storage medium 68 to the memory 64. The non-transitory computer readable storage medium 68 may be, for example, a USB flash drive, a secure digital (SD) card, an optical disc (such as a compact disc (CD), a digital versatile disc (DVD) or a Blu-ray disc). In some examples, the computer program 66 may be transferred to the memory 64 via a signal 70 (such as a wireless signal or a wired signal).

Input/output devices may be coupled to the controller 16 either directly or through intervening input/output controllers. Various communication adaptors may also be coupled to the controller 16 to enable the apparatus 10 to become coupled to other apparatus 10 or remote printers or storage devices through intervening private or public networks. Non-limiting examples include modems and network adaptors of such communication adaptors.

In some examples, the apparatus 10 may be a module. As used herein, the wording 'module' refers to a device or apparatus where one or more features are included at a later time and, possibly, by another manufacturer or by an end user. For example, where the apparatus 10 is a module, the apparatus 10 may only include the flexible cover 14 and the first elastic strain sensor 14, and the remaining features (such as the controller 16) may be added by another manufacturer, or by an end user. By way of another example, a plurality of separate apparatus 10 may be used to provide a cover for the continuum robot 26. The plurality of apparatus 10 may be arranged on the continuum robot 26 so that each flexible cover 12 overlays a segment of the continuum robot 26. The plurality of apparatus 10 may be electrically connected to one another in parallel so that separate output signals may be provided from each apparatus 10.

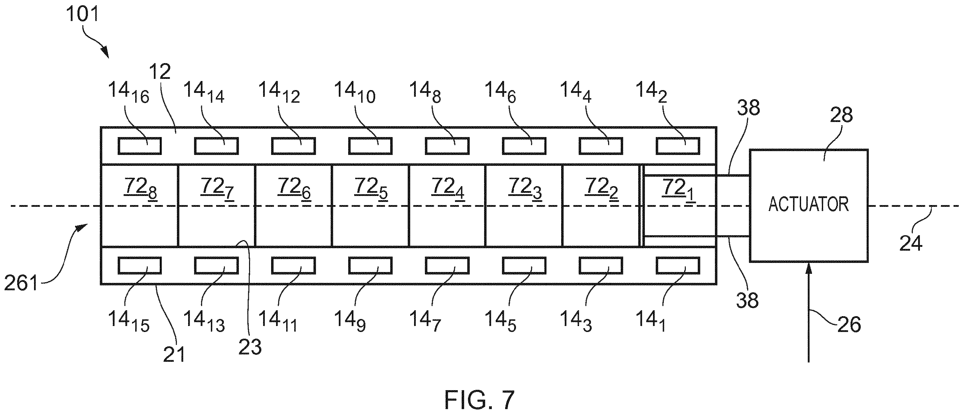

Fig. 7 illustrates a schematic diagram of a second apparatus 101 and a continuum robot 261 according to various examples. The second apparatus 101 is similar to the first apparatus 10 and where the features are similar, the same reference numerals are used. Similarly, the continuum robot 261 is similar to the continuum robot 26 illustrated in Fig. 1 and where the features are similar, the same reference numerals are used.

The continuum robot 261 includes an actuator 28 and a plurality of segments 72. The actuator 28 may include a plurality of servomotors for controlling movement of the continuum robot 261. For example, the actuator 28 may include one or more servomotors for each segment of the plurality of segments 72.

The plurality of segments 72 may have any suitable structure and may be similar to the first and second segments 30, 32 illustrated in Fig. 2. Control cables are coupled between the actuator 28 and an end disk of each of the segments 72. For example, control cables 38 are coupled between a servomotor of the actuator 28 and the end disk 74 of the first segment 72₁. Control cables for the second, third, fourth, fifth, sixth, seventh and eighth segments 72₂, 72₃, 72₄, 72₅, 72₆, 72₇, 72₈ have not been illustrated to maintain the clarity of Fig. 7.

The second apparatus 101 includes a flexible cover 12 defining a longitudinal axis 24, a first elastic strain sensor 14₁, a second elastic strain sensor 14₂, a third elastic strain sensor 14₃, a fourth elastic strain sensor 14₄, a fifth elastic strain sensor 14₅, a sixth elastic strain sensor 14₆, a seventh elastic strain sensor 14₇, an eighth elastic strain sensor 14₈, a ninth elastic strain sensor 14₉, a tenth elastic strain sensor 14₁₀, an eleventh elastic strain sensor 14₁₁, a twelfth elastic strain sensor 14₁₂, a thirteenth elastic strain sensor 14₁₃, a fourteenth elastic strain sensor 14₁₄., a fifteenth elastic strain sensor 14₁₅, and a sixteenth elastic strain sensor 14₁₆

The first and second elastic strain sensors 14_{1,2} are axially positioned within the ends of the first segment 72₁ and are arranged to at least partially overlap one another along the longitudinal axis 24. The first and second elastic strain sensors 14_{1,2} are configured to provide first and second output signals associated with movement of the flexible cover 12 at the first segment 72₁. The controller 16 is configured to receive the first and second output signals from the first and second elastic strain sensors 14_{1,2}.

The third and fourth elastic strain sensors 14_{3,4} are axially positioned within the ends of the second segment 72₂ and are arranged to at least partially overlap one another along the longitudinal axis 24. The third and fourth elastic strain sensors 14_{3,4} are configured to provide third and fourth output signals associated with movement of the flexible cover 12 at the second segment 72₂. The controller 16 is configured to receive the third and fourth output signals from the third and fourth elastic strain sensors 14_{3,4}.

The fifth and sixth elastic strain sensors 14_{5,6} are axially positioned within the ends of the third segment 72₃ and are arranged to at least partially overlap one another along the longitudinal axis 24. The fifth and sixth elastic strain sensors 14_{5,6} are configured to provide fifth and sixth output signals associated with movement of the flexible cover 12 at the third segment 72₃. The controller 16 is configured to receive the fifth and sixth output signals from the fifth and sixth elastic strain sensors 14_{5,6}.

The seventh and eighth elastic strain sensors 14_{7,8} are axially positioned within the ends of the fourth segment 72₄ and are arranged to at least partially overlap one another along the longitudinal axis 24. The seventh and eighth elastic strain sensors 14_{7,8} are configured to provide seventh and eighth output signals associated with movement of the flexible cover 12 at the fourth segment 72₄. The controller 16 is configured to receive the seventh and eighth output signals from the seventh and eighth elastic strain sensors 14_{7,8}.

The ninth and tenth elastic strain sensors 14_{7,8} are axially positioned within the ends of the fifth segment 72₅ and are arranged to at least partially overlap one another along the longitudinal axis 24. The ninth and tenth elastic strain sensors 14_{9,10} are configured to provide ninth and tenth output signals associated with movement of the flexible cover 12 at the fifth segment 72₅. The controller 16 is configured to receive the ninth and tenth output signals from the ninth and tenth elastic strain sensors 14_{9,10}.

The eleventh and twelfth elastic strain sensors 14_{11,12} are axially positioned within the ends of the sixth segment 72₆ and are arranged to at least partially overlap one another along the longitudinal axis 24. The eleventh and twelfth elastic strain sensors 14_{11,12} are configured to provide eleventh and twelfth output signals associated with movement of the flexible cover 12 at the sixth segment 72₆. The controller 16 is configured to receive the eleventh and twelfth output signals from the eleventh and twelfth elastic strain sensors 14_{11,12}.

The thirteenth and fourteenth elastic strain sensors 14_{13,14} are axially positioned within the ends of the seventh segment 72₇ and are arranged to at least partially overlap one another along the longitudinal axis 24. The thirteenth and fourteenth elastic strain sensors 14_{13,14} are configured to provide thirteenth and fourteenth output signals associated with movement of the flexible cover 12 at the seventh segment 72₇. The controller 16 is configured to receive the thirteenth and fourteenth output signals from the thirteenth and fourteenth elastic strain sensors 14_{13,14}.

The fifteenth and sixteenth elastic strain sensors 14_{15,16} are axially positioned within the ends of the eighth segment 72₈ and are arranged to at least partially overlap one another along the longitudinal axis 24. The fifteenth and sixteenth elastic strain sensors 14_{15,16} are configured to provide fifteenth and sixteenth output signals associated with movement of the flexible cover 12 at the eighth segment 72₈. The controller 16 is configured to receive the fifteenth and sixteenth output signals from the fifteenth and sixteenth elastic strain sensors 14_{15,16}.

The first elastic strain sensor 14₁, the third elastic strain sensor 14₃, the fifth elastic strain sensor 14₅, the seventh elastic strain sensor 14₇, the ninth elastic strain sensor 14₉, the eleventh elastic strain sensor 14₁₁, the thirteenth elastic strain sensor 14₁₃ and the fifteenth elastic strain sensor 14₁₄ are positioned to not overlap one another along the longitudinal axis 24. Similarly, the second elastic strain sensor 14₂, the fourth elastic strain sensor 14₄, the sixth elastic strain sensor 14₆, the eighth elastic strain sensor 14₈, the tenth elastic strain sensor 14₁₀, the twelfth elastic strain sensor 14₁₂, the fourteenth elastic strain sensor 14₁₄, and the sixteenth elastic strain sensor 14₁₆ are positioned to not overlap one another along the longitudinal axis 24.

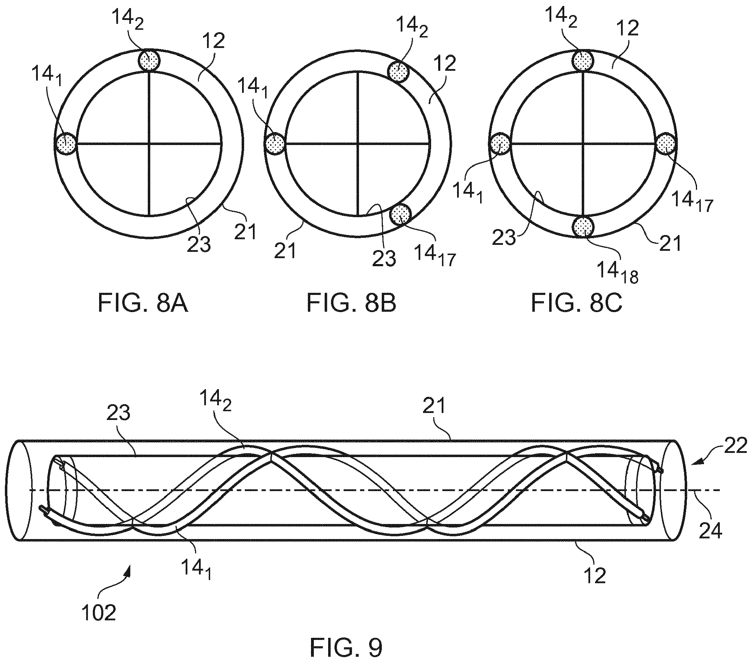

Elastic strain sensors may be positioned around the longitudinal axis 24 in various arrangements. For example, as illustrated in Fig. 8A (a view along the longitudinal axis 24 of the flexible cover 12), the first elastic strain sensor 14₁ may be positioned at a nine o clock position, and the second elastic strain sensor 14₂ may be positioned at a twelve o clock position. This arrangement may be used to measure two different degrees of freedom in bending.

By way of another example, as illustrated in Fig. 8B (a view along the longitudinal axis 24 of the flexible cover 12), the first elastic strain sensor 14₁ may be positioned at a nine o clock position, the second elastic strain sensor 14₂ may be positioned at a one o clock position, and a seventeenth elastic strain sensor 14₁₇ may be positioned at a five o clock position. Where the first segment 72₁ has two degrees of freedom, the three elastic strain sensors 14₁, 14₂, 14₁₇ may advantageously provide redundancy to measurements made from the output of the three elastic strain sensors 14₁, 14₂, 14₁₇, or may be used to measure the shape of a segment with three degrees of movement.

By way of a further example, as illustrated in Fig. 8C (a view along the longitudinal axis 14 of the flexible cover 12), the first elastic strain sensor 14₁ may be positioned at a nine o clock position, the second elastic strain sensor 14₂ may be positioned at a twelve o clock position, the third seventeenth strain sensor 14₁₇ may be positioned at a three o clock position, and a fourth elastic strain sensor 14₁₈ may be positioned at a six o clock position. Where the first segment 72₁ has two degrees of freedom, the four elastic strain sensors 14₁, 14₂, 14₁₇, 14₁₈ may advantageously provide redundancy to each degree of freedom by the measurements made from the output of the four elastic strain sensors 14₁, 14₂, 14₁₇, 14₁₈ and include a tension and a relaxation measurement.

Fig. 9 illustrates a schematic side view of a third apparatus 102 according to various examples. The third apparatus 102 is similar to the first and second apparatus 10, 101 and where the features are similar, the same reference numerals are used.

The third apparatus 102 includes a flexible cover 12 that is configured to cover one segment of a continuum robot 26. The flexible cover 12 includes a first elastic strain sensor 14₁ that is embedded within the flexible cover 12 and extends helically around the longitudinal axis 24 of the flexible cover 12 on a right hand helix. Additionally, the flexible cover 12 includes a second elastic strain sensor 14₂ that is embedded within the flexible cover 12 (at different positions to the first elastic strain sensor 14₁) and extends helically around the longitudinal axis 24 of the flexible cover 12 on a left hand helix.

The third apparatus 102 may be advantageous in that the helical arrangement of the one or more elastic strain sensors 14₁, 14₂ may enable torsion of the flexible cover 12 (and thus a continuum robot 26 within the cavity 22 of the flexible cover 12) to be measured from the output signals of the first and second elastic strain sensors 14₁, 14₂. It should be appreciated that torsion may be measured from the output signal of a single helically arranged elastic strain sensor. Where two or more elastic strain sensors are helically arranged (as illustrated in Fig. 9), the two or more output signals provide redundancy to the torsion measurement.

Fig. 10 illustrates a flow diagram of a method of controlling a continuum robot 26 according to various examples.

At block 76, the method includes receiving the first output signal from the first elastic strain sensor. For example, the controller 16 may receive the first output signal 44 from the first elastic strain sensor 14. It should be appreciated that where an apparatus includes a plurality of elastic strain sensors (such as the apparatus illustrated in Figs. 7, 8A, 8B, 8C and 9), block 76 may include receiving output signals from the plurality of elastic strain sensors.

At block 78, the method includes determining the shape of at least a part of the flexible cover using the received first output signal. For example, the controller 16 may store a data structure 80 (such as a look-up table) that includes a plurality of first output signal values and a plurality of corresponding shapes of the flexible cover 12. The controller 16 may determine the shape of the flexible cover 12 by reading the data structure 80 and by selecting the shape that has a first output signal value closest to the received first output signal 44.

The data structure 80 may be generated and stored in the memory 64 using a calibration process. For example, the apparatus 10, 101, 102, may be calibrated using a two dimensional or a three dimensional vision system. The apparatus 10, 101, 102 may be moved in controlled steps and the real position of the end of the flexible cover 12 (or the ends of a plurality of sections of the flexible cover 12) is monitored along with the resistance or capacitance of the one or more elastic strain sensors. The outcome of this test is then compared to theoretical values from models of elastic strain sensors and their change of resistance or capacitance with cross sectional area. The output signal from the one or more elastic strain sensors may thus be related to a value of curvature of the section of the flexible cover 12 that it is coupled to. The output signal values and the corresponding values of curvature may be stored in the memory 64 as the data structure 80.

The data structure 80 may be comprise any suitable arrangement of information, for example,the data structure 80 may comprise: a look-up table or a system of equations that relate the strain ε to property x (resistance, capacitance, and so on). The former uses ε and x measurements directly to inform the controller 16, the latter uses a model of the system (knowledge of the physical phenomena that change x due to changes in ε) and calculates ε based on measured x. Calibration serves to either build the ε, x look-up table or validate the model so that ε can be described as a function of x.

Where the elastic strain sensors of the apparatus 10, 101, 102 are affected by the ambient temperature, the calibration process may include obtaining output signals from the one or more elastic strain sensors and values of curvature at a plurality of different temperatures. In such examples, the shape of the flexible cover 12 may be read from the data structure 80 using the received first output signal and a sensed temperature value at the flexible cover 12 from the temperature sensor 27.

At block 82, the method includes controlling the actuator 28 using the determined shape of the flexible cover 12 to move the continuum robot 26, 261. For example, the continuum robot 26, 261 may have received an instruction to adopt a desired shape (for example, to reach a particular area within a gas turbine engine). The controller 16 may use the determined shape from block 78 and the desired shape to determine the control signals for moving the continuum robot 26, 261 from the determined shape and towards the desired shape. The controller 16 may then send the determined control signals to the actuator 28 of the continuum robot 26, 261 to move the segments of the continuum robot 26, 261.

The method may then return to block 76, or may end.

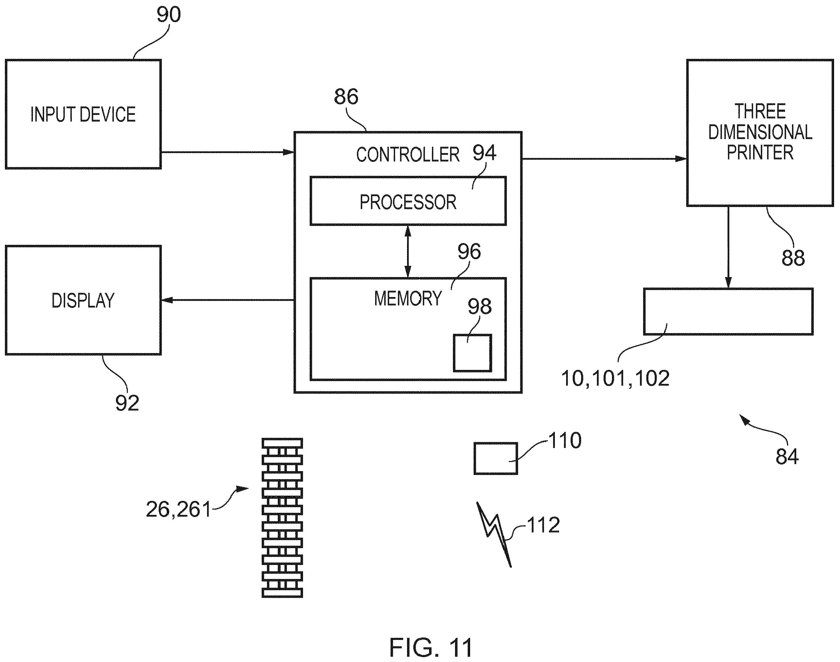

Fig. 11 illustrates a schematic diagram of apparatus 84 for controlling manufacture of an apparatus 10, 101, 102 for enabling determination of a shape of at least a portion of a continuum robot 26, 261 according to various examples. The apparatus 84 includes a controller 86, a three dimensional printer 88, an input device 90, and a display 92.

In some examples, the apparatus 84 may be a module and may only comprise the controller 86 for example. In such examples, the remaining features (such as the three dimensional printer 88, the input device 90 and the display 92) may be added by another manufacturer, or may be added by the end user.

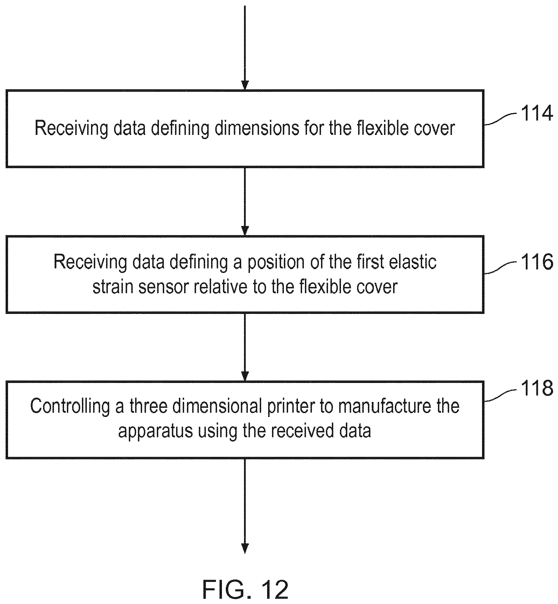

The controller 86 may comprise any suitable circuitry to cause performance of the methods described herein and as illustrated in Fig. 12. The controller 86 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), to perform the methods.

In various examples, the controller 86 may comprise at least one processor 94 and at least one memory 96. The memory 96 stores a computer program 98 comprising computer readable instructions that, when read by the processor 94, causes performance of the methods described herein, and as illustrated in Fig. 12. The computer program 98 may be software or firmware, or may be a combination of software and firmware.

The computer program 98 may be stored on a non-transitory computer readable storage medium 110. The computer program 98 may be transferred from the non-transitory computer readable storage medium 110 to the memory 98. The non-transitory computer readable storage medium 110 may be, for example, a USB flash drive, a secure digital (SD) card, an optical disc (such as a compact disc (CD), a digital versatile disc (DVD) or a Blu-ray disc). In some examples, the computer program 98 may be transferred to the memory 96 via a signal 112 (such as a wireless signal or a wired signal).

Input/output devices may be coupled to the controller 86 either directly or through intervening input/output controllers. Various communication adaptors may also be coupled to the controller 86 to enable the apparatus 84 to become coupled to other displays or remote printers or storage devices through intervening private or public networks. Non-limiting examples include modems and network adaptors of such communication adaptors.

The three dimensional printer 88 may use any suitable additive layer manufacturing (ALM) process for manufacturing the apparatus 10, 101, 102. For example, the three dimensional printer 88 may use a fused deposition modelling (FDM) process, a fused filament fabrication (FFF) process, a selective heat sintering (SHS) process, or a selective laser sintering (SLS) process. The controller 86 is configured to control the operation of the three dimensional printer 88.

The input device 90 may comprise any suitable device for enabling information to be input to the apparatus 84. For example, the input device 90 may comprise one or more of a keyboard, a keypad, a touchpad, a touchscreen display, and a computer mouse for enabling an operator to manually enter information into the apparatus 84. By way of another example, the input device 90 may include a three dimensional scanner (such as a coordinate measuring machine) for scanning the continuum robot 26, 261 to obtain three dimensional data (such as point cloud data) of the continuum robot 26, 261. The controller 86 is configured to receive data from the input device 90.

The display 92 may be any suitable device for conveying information to an operator. For example, the display may be a liquid crystal display, or a light emitting diode display, or an active matrix organic light emitting diode display, or a thin film transistor display, or a cathode ray tube display. The controller 84 is configured to provide a signal to the display 92 to cause the display 92 to convey information to the operator.

The operation of the apparatus 84 is described in the following paragraphs with reference to Fig. 12.

At block 114, the method includes receiving data defining dimensions for the flexible cover 12. For example, an operator may use the input device 90 to input dimensional data for the flexible cover 12 to the controller 86. The dimensional data may include, for example, the dimensions of the cavity 22 and the depth of the flexible cover 12 between the inner surface 23 and the outer surface 21.

By way of another example, a three dimensional scanner of the input device 90 may scan the continuum robot 26, 261 to generate scan data. The controller 86 may receive the scan data from the three dimensional scanner of the input device 90 and use the received scan data to determine the dimensions for the flexible cover 12. For example, the diameter of the continuum robot 26, 261 may be used by the controller 86 to determine the diameter of the cavity 22 of the flexible cover 12.

At block 116, the method includes receiving data defining a position of the first elastic strain sensor 14 relative to the flexible cover 12. For example, an operator may use the input device 90 to input the position of the first elastic strain sensor 14 on (or in) the flexible cover 12. The operator may provide a position for the first elastic strain sensor 14 that results in the first elastic strain sensor 14 being positioned axially within a segment of the continuum robot 26, 261, when the continuum robot 26, 261 is fitted within the cavity 22 of the flexible cover 12.

In another example, a three dimensional scanner of the input device 90 may scan the continuum robot 26, 261 to generate scan data. The controller 86 may receive the scan data from the three dimensional scanner of the input device 90 and use the received scan data to determine the dimensions of the segments of the continuum robot 26, 261 (for example, by identifying those disks where the control cables end). The controller 86 may then use the determined dimensions of the segments of the continuum robot 26, 261 to determine a position for the first elastic strain sensor 14 that results in the first elastic strain sensor 14 being positioned axially within a segment of the continuum robot 26, 261, when the continuum robot 26, 261 is fitted within the cavity 22 of the flexible cover 12.

It should be appreciated that at block 116, the method may include receiving data defining a position of a plurality of elastic strain sensors relative to the flexible cover 12.

At block 118, the method includes controlling the three dimensional printer to manufacture the apparatus 10, 101, 102 using the data received at blocks 114 and 116. For example, the controller 86 may control the three dimensional printer 88 to print the apparatus 10, 101, 102 using the data defining dimensions for the flexible cover 12 received at block 114, and using the data defining a position of at least the first elastic strain sensor relative to the flexible cover 12 received at block 116.

The apparatus 10, 101, 102 and the above described methods may provide several advantages. First, the apparatus 10, 101, 102 may provide a relatively inexpensive means for determining the shape of a continuum robot. Second, the apparatus 10, 101, 102 may be retrofitted to a continuum robot, thus allowing measurement and control of existing robots. Third, the apparatus 10, 101, 102 may be manufactured relatively quickly and easily using a three dimensional printer. Fourth, the apparatus 10, 101, 102 may enable a continuum robot to be used in a confined environment because the elastic strain sensors may have a low profile (that is, their dimension measured perpendicularly to the longitudinal axis 24 is relatively small). Fifth, the apparatus 10, 101, 102 may enable a continuum robot 26, 261 to be used within a machine (such as a gas turbine engine) because the operation of the elastic strain sensors is not affected by interference with metallic parts of the machine. Sixth, the ability to control the movement of a continuum robot 26, 261 using the elastic strain sensors may place a relatively low burden on the processing power of the controller 16. For example, the controller 16 may use relatively little processing power where the data structure 80 is a look-up table.

It will be understood that the invention is not limited to the embodiments above-described and various modifications and improvements can be made without departing from the concepts described herein. For example, the different embodiments may take the form of an entirely hardware embodiment, an entirely software embodiment, or an embodiment containing both hardware and software elements.

Except where mutually exclusive, any of the features may be employed separately or in combination with any other features and the disclosure extends to and includes all combinations and sub-combinations of one or more features described herein.

## Claims

1. Apparatus for enabling determination of a shape of at least a portion of a continuum robot, the apparatus comprising:
a flexible cover defining a first end, a second end opposite to the first end, and a cavity for receiving at least a portion of a continuum robot therein; and
a first elastic strain sensor coupled to the flexible cover and being configured to provide a first output signal associated with movement of the flexible cover.

2. Apparatus as claimed in claim 1, wherein the flexible cover is elongate and has a longitudinal axis that extends between the first end and the second end, the cavity being elongate and extending along the longitudinal axis.

3. Apparatus as claimed in claim 2, wherein the cavity extends between the first end and the second end, and is open at the first end and at the second end.

4. Apparatus as claimed in any of the preceding claims, wherein the first elastic strain sensor comprises a conductive elastic material.

5. Apparatus as claimed in any of claims 1 to 3, wherein the first elastic strain sensor comprises a non-conductive elastic vessel defining a cavity therein, and a conductive material positioned within the cavity.

6. Apparatus as claimed in claim 5, wherein the conductive material positioned within the cavity of the non-conductive elastic vessel comprises a conductive liquid.

7. Apparatus as claimed in claim 6, further comprising a plurality of fibres positioned within the cavity of the non-conductive elastic vessel.

8. Apparatus as claimed in any of claims 1 to 4, wherein the first elastic strain sensor comprises a first conductive elastic member, a second conductive elastic member, and a non-conductive elastic member positioned between the first conductive elastic member and the second conductive elastic member.

9. Apparatus as claimed in any of the preceding claims, further comprising a second elastic strain sensor coupled to the flexible cover, the second elastic strain sensor being configured to provide a second output signal associated with the movement of the flexible cover.

10. Apparatus as claimed in claim 9, wherein the flexible cover defines a longitudinal axis, the first elastic strain sensor and the second elastic strain sensor being positioned to at least partially overlap one another along the longitudinal axis.

11. Apparatus as claimed in claim 10, further comprising a controller configured to receive the first output signal and the second output signal, and to perform a torsion measurement of the first segment using the received first output signal and the second output signal.

12. Apparatus as claimed in claim 9, wherein the flexible cover defines a longitudinal axis, the first elastic strain sensor and the second elastic strain sensor are positioned to not overlap one another along the longitudinal axis.

13. Apparatus as claimed in any of the preceding claims, further comprising a controller configured to receive the first output signal from the first elastic strain sensor, and to determine the shape of at least a part of the flexible cover.

14. Apparatus as claimed in claim 13, wherein the controller is configured to control an actuator of the continuum robot using the determined shape of at least the part of the flexible cover to move the continuum robot.

15. Apparatus as claimed in any of the preceding claims, further comprising a continuum robot, the flexible cover being separate to the continuum robot, the continuum robot further comprising a plurality of segments, each segment of the plurality of segments having a first end and a second opposite end, the flexible cover being positionable on the continuum robot so that the first elastic strain sensor is positioned within the first end and the second end of a segment of the plurality of segments.
